# EUROPEAN PATENT SPECIFICATION

(11) **EP 3 839 233 B1**
(45) Date of publication and mention of the grant of the patent: **19.06.2024**
(21) Application number: 20209376.1
(22) Date of filing: 24.11.2020
(51) Int. Cl.: F02C 7/12, F01D 5/08

(54) **GAS TURBINE ENGINE AND OPERATION METHOD**
GASTURBINENMOTOR UND BETRIEBSVERFAHREN
MOTEUR À TURBINE À GAZ ET PROCÉDÉ DE FONCTIONNEMENT

(30) Priority: 18.12.2019 GB 201918695
(43) Date of publication of application: 23.06.2021
(73) Proprietor: Rolls-Royce plc, London N1 9FX (GB)
(72) Inventor: Cristinacce, Nicholas, Derby, Derbyshire DE24 8BJ (GB); Stieger, Rory, Derby, Derbyshire DE24 8BJ (GB)
(74) Representative: Rolls-Royce plc

(56) References cited:
- US-A1- 2012 034 081
- US-A1- 2013 111 921
- US-A1- 2015 096 304

## Description

The present disclosure concerns a method of operating a gas turbine engine, a control system for controlling a gas turbine engine, and a gas turbine engine employing the control system.

Aircraft gas turbine engines are required to operate for long periods of time (of the order of thousands of hours between overhauls), reliably and efficiently, over a wide range of conditions. For example, aircraft engines are required to provide high power for take-off, which must then be throttled back to lower power for climb and cruise. During operation, the engine is subject to varying atmospheric conditions, varying from high temperature, relatively high-pressure air at sea level, to low temperature, low pressure air at altitude.

This continual change in conditions and thrust levels leads to wear of the engine. Typically, a limiting factor for the longevity of an aircraft gas turbine engine is crack propagation of turbine discs and other rotating components. During operation, cracks may form. Once cracks are initiated, the engine must be overhauled. In most cases, the engine is overhauled before cracks form, and this often defines the maximum time between overhauls for the engine.

United States patent application US 2015096304 discloses a gas turbine engine high pressure rotor with first and second high pressure turbine stages include first and second stage disks having first and second stage disk bores and a single tie rod therethrough. First and second bore annular flowpaths are radially located between first and second stage disk bores and tie rod. A means for increased cooling and/or heating in second stage disk bore is axially located within second stage disk bore. The means may include an airflow accelerator such as one or more annular ribs on the tie rod. A bore annular cross-sectional flow area between the second stage disk hub and the ribs may be substantially smaller than between the second stage disk hub and the tie rod. An axially unobstructed inlet into the second bore annular flowpath allows fully axially flowing and axially unobstructed flowing of second stage bore cooling air into inlet.

United States patent application US 2013111921 discloses a method for warming the rotor of a gas turbine during extended periods of downtime comprising feeding ambient air to an air blower; extracting compressed air from the air blower; feeding a portion of the compressed air to one side of a heat exchanger and steam (typically saturated) from e.g. a gas turbine heat recovery steam generator; passing the resulting heated air stream from the exchanger into and through into defined flow channels formed within the rotor; continuously monitoring the air temperature inside the rotor; and controlling the amount of air and steam fed to the heat exchanger using a feedback control loop that controls the amount of air and steam feeds to the exchanger and/or adjusts the flow rate of heated air stream into the rotor.

United States patent application US 2012034081 discloses a compressor blade root heating system for a turbine engine. The compressor blade root heating system may be formed from one or more induction heaters formed from one or more induction coils positioned in close proximity to a root of a compressor blade. In one embodiment, the induction heater may be coupled to a static casing component positioned immediately upstream of a first row of compressor blades on a rotor assembly such that the induction heater is stationary during turbine engine operation. The induction heater causes eddy current formation, which heats the row one compressor blades. This heating increases the fracture toughness of the material forming the rotor and compressor blades, thereby increasing the mechanical life cycle.

Consequently therefore, it is an object (amongst others) of the present disclosure to provide an operating method, a control system and an engine, which seeks to reduce the formation and propagation of cracks in engine components, to thereby extend engine life.

According to a first aspect there is provided a method of operating a gas turbine engine for an aircraft according to claim 1.

It has been found that, in the event of an engine acceleration or deceleration event, the temperature of turbine discs increases rapidly. This heating is generally not even, with some parts of the disc increasing in temperature more rapidly than others. Consequently, a temperature gradient exists in such circumstances. As will be understood, such temperature gradients will result in stresses to the disc, in view of thermal expansion. By increasing the temperature of the disc by providing heat input to the disc in advance of or during engine acceleration or deceleration events, the temperature increase can occur over a longer period of time. Consequently, temperature gradients, and therefore stresses, are reduced, since there is adequate time for the temperature to be evenly distributed. The disclosed system therefore reduces turbine disc stresses, and so increases disc life, which may in turn increase the life of the engine.

The step of detecting an engine acceleration or deceleration event may comprise detecting an engine thrust demand setting change or an autopilot or autothrottle input.

The step of determining that an engine acceleration or deceleration event is imminent may comprise determining an impending flight phase of the aircraft. An engine acceleration may be determined as being imminent when the aircraft is expected to commence one or more of a climb flight phase, and a descent flight phase.

The step of determining that an engine acceleration event is imminent may comprise receiving data from one or more of an auto-pilot controller, an auto-throttle controller, and an air traffic control system.

The method may comprise maintaining increased heating of the disc until the engine acceleration or deceleration event commences, or may comprise continuing the increased heating during engine acceleration or deceleration. The method may comprise ceasing increased heating of the disc when the disc reaches a predetermined temperature.

The step of increasing disc heat input may comprise activating an electrical heating device configured to increase disc temperature.

The electrical heating device may comprise one or more of a resistive heating device and an induction heating device. For example, the electrical heating device may comprise one of a resistive heating device and an induction heating device provided in a cooling airflow, configured to raise a temperature of a cooling airflow delivered to the turbine disc. Alternatively or in addition, the electrical heating device may comprise an inductive heater configured to directly induce inductive heating in the turbine disc.

The method may comprise increasing heat input to one or more of a rim of a disc, and a bore of a disc. Advantageously, it has been found that increasing heat input to the rim of one or more discs leads to reduced peak compressive stress. Increasing heat input to the bore has been found to reduce bore-to-rim temperature gradients, thereby reducing stresses in a diaphragm of the disc. Depending on particulars of the engine design, or one both of these may be a limiting factor in engine life.

According to a second aspect, there is provided a gas turbine engine for an aircraft according to claim 13.

According to a fourth aspect, which is not part of the claims, there is provided a non-transitory computer readable storage medium comprising computer readable instructions that, when read by a computer, cause performance of the method of the first aspect.

Embodiments will now be described by way of example only, with reference to the Figures, in which:
**Figure 1** is a sectional side view of a gas turbine engine;
**Figure 2** is a schematic diagram of a turbine of the gas turbine engine of figure 1;
**Figure 3** is a schematic diagram of a compressor of the gas turbine engine of figure 1;
**Figure 4** is a sectional side view of part of the cooling system of the gas turbine engine of figure 1;
**Figure 5** is a sectional side view of a first alternative turbine disc heating apparatus for the gas turbine of figure 1
**Figure 6** is a schematic diagram of a control system for the disc heating system of figure 5
**Figure 7** is a graph showing engine operation through a typical lifecycle, along with typical disc loads, and example operation of the cooling system;
**Figure 8** is a flow diagram of a first method of operating the gas turbine engine of figure 1;

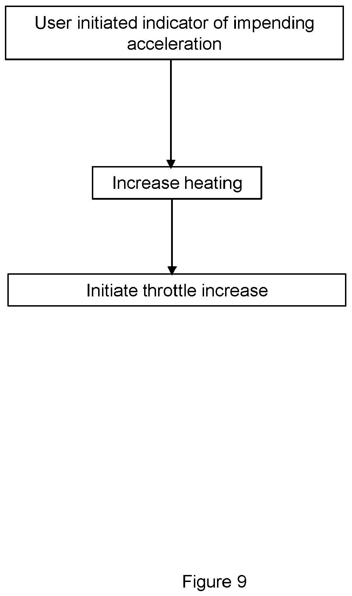

**Figure 9** is a flow diagram of a second method of operating the gas turbine engine of figure 1; and
**Figure 10** is a sectional side view of a first alternative turbine disc heating apparatus for the gas turbine of figure 1.

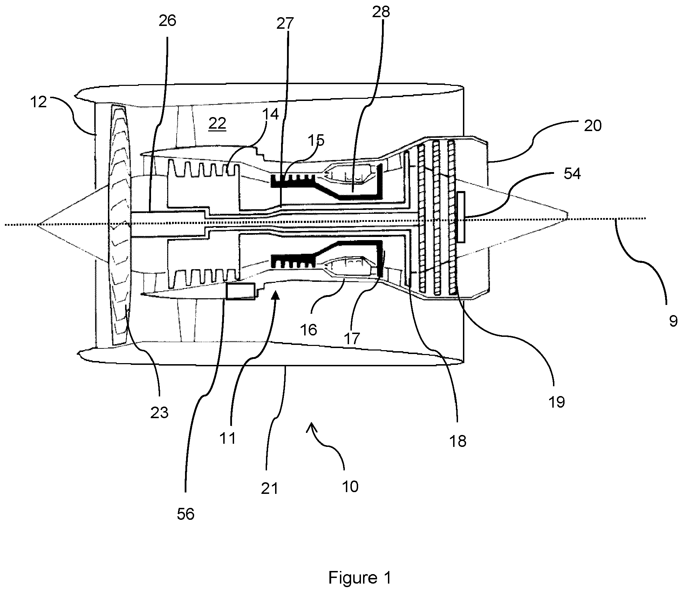

Figure 1 illustrates a gas turbine engine 10 having a principal rotational axis 9. The engine 10 comprises an air intake 12 and a propulsive fan 23 that generates two airflows A and B. The gas turbine engine 10 comprises a core engine 11 having, in axial flow A, an intermediate-pressure compressor 14, a high-pressure compressor 15, combustion equipment 16, a high-pressure turbine 17, an intermediate-pressure turbine 18, a low-pressure turbine 19 and a core exhaust nozzle 20. A nacelle 21 surrounds the gas turbine engine 10 and defines, in axial flow B, a bypass duct 22 and a bypass exhaust nozzle 18. The fan 23 is attached to and driven by the low-pressure turbine 19 via shaft 26. Similarly, the intermediate-pressure compressor 14 is attached to and driven by the intermediate-pressure turbine 18 via shaft 27, and the high-pressure compressor 15 is attached to and driven by the high-pressure turbine 18 via shaft 28.

Additionally or alternatively such engines may have an alternative number of compressors and/or turbines and/or an alternative number of interconnecting shafts.

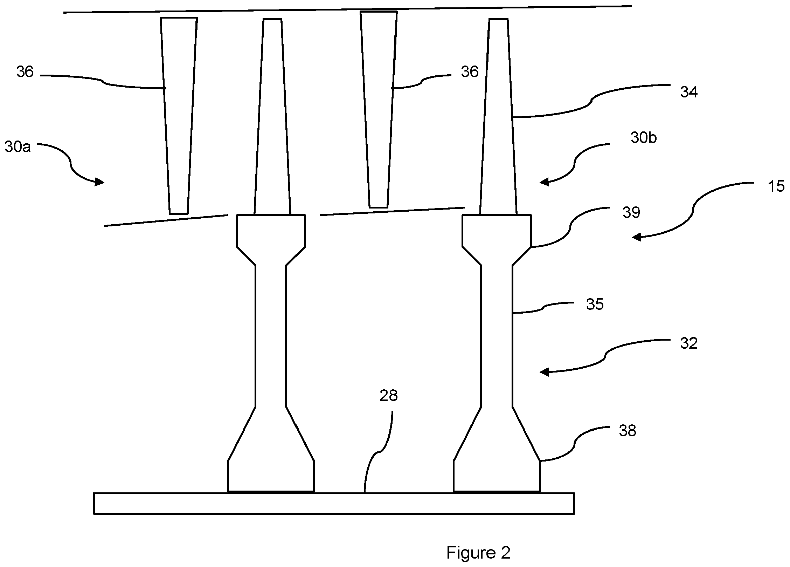

The high-pressure turbine 17 is shown schematically in more detail in figure 2. The high-pressure turbine 17 comprises a plurality of stages 30a, 30b. Each stage comprises a respective turbine disc 32, which each mounts a plurality of turbine rotor blades 34. Each stage further comprises a plurality of stator vanes 36, provided between the turbine rotor blades 34 of each stage.

The discs 32 each comprise a generally annular form, comprising a disc having a through-hole at a radial centre. The discs 32 can be notionally divided into a radially inner section 38 (known as a "bore"), a radially outer section 39 (known as a "rim") and a web section 35 which extends therebetween (known as a "diaphragm"). In general, each of these sections of the turbine disc typically require cooling in use, to different extents.

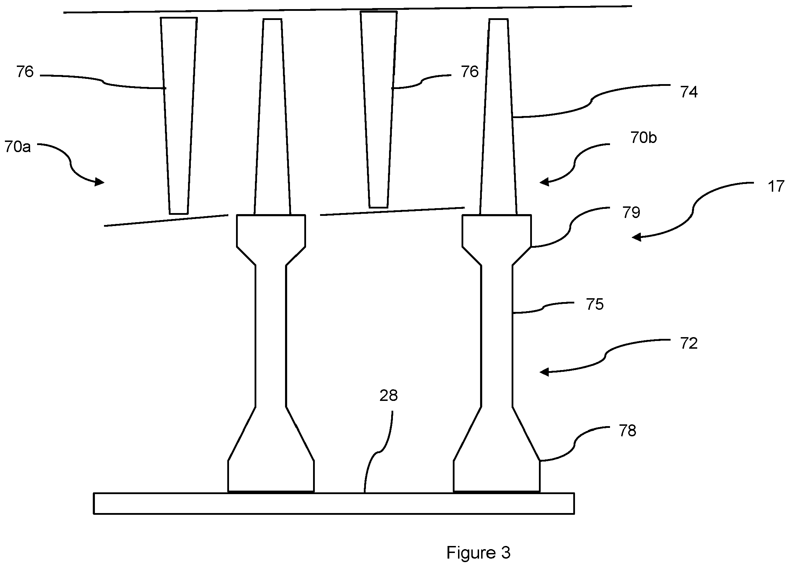

The high-pressure compressor 15 is shown schematically in more detail in figure 3. The high-pressure compressor 15 also comprises a plurality of stages 70a, 70b. Each stage comprises a respective compressor disc 72, which each mounts a plurality of compressor rotor blades 74. Each stage further comprises a plurality of stator vanes 76, provided between the compressor rotor blades 74 of each stage 70a, 70b.

The discs 72 are similar to the turbine discs, and each comprise a generally annular form, comprising a disc having a through-hole at a radial centre. The discs 72 can be notionally divided into a radially inner section 78 (known as a "bore"), a radially outer section 79 (known as a "rim") and a web section 75 which extends therebetween (known as a "diaphragm"). Typically, compressors does not comprise cooling systems, but are nevertheless subject to heating in use, due to air compression. Consequently, the temperature of the compressor discs 72 varies during flight, as the engine accelerates and decelerates.

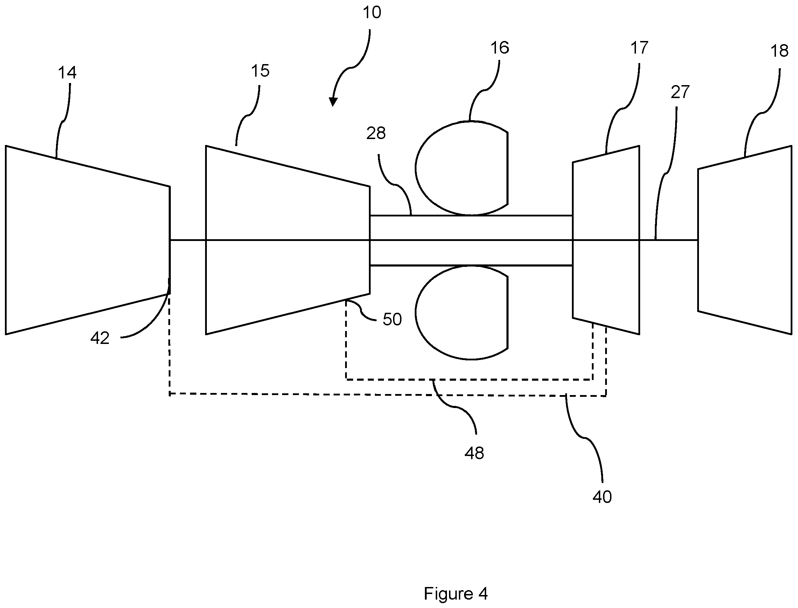

The whole engine 10 is also shown schematically in figure 4. In figure 4, a "secondary air system" comprising a turbine cooling system is shown. As can be seen, the cooling system comprises a first cooling passage 40, which extends from a low-pressure bleed port 42 provided in fluid communication with a final stage of the low-pressure compressor 14.

The cooling system also comprises a second cooling passage 48, which extends from a high-pressure bleed port 50 provided in fluid communication with a final stage of the high-pressure compressor 15.

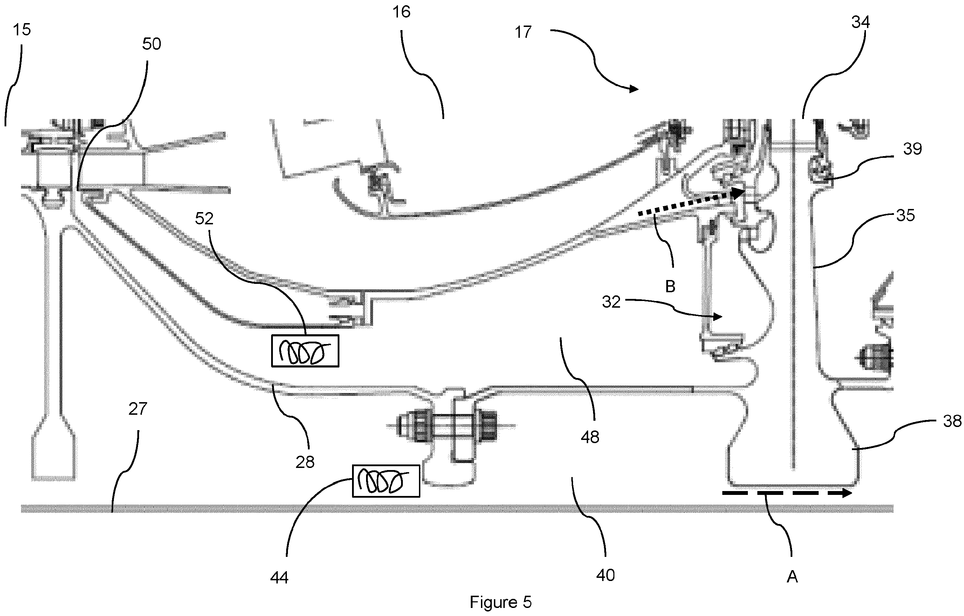

Part of the cooling system is shown in further detail in figure 5, which shows a cross-section through part of the high-pressure compressor 15, combustor 16 and high-pressure turbine 17.

Figure 5 shows cooling airflows which are typically provided to different parts of the disc 32. The first cooling passage 40 is defined by an annular space defined between the low-pressure shaft 27 and the high-pressure shaft 28. A first cooling flow (shown by dashed arrows A) is provided to the bore 38. The first cooling flow can generally be at a relatively low pressure, since the first cooling flow does not have to enter the main gas stream. As can be seen, the cooling flow impinges on the disc 32 from a single side (or in some cases, from both sides). In either case, thermal gradients can occur between the cooled surfaces of the disc 32, and the uncooled surfaces and uncooled centre of the disc 32.

The second cooling passage 48 is defined by an annular space defined between the combustor 16 and the high-pressure shaft 28. A second cooling flow (shown by dashed arrows B) is provided to the bore rim 39 and diaphragm 35. The second cooling flow is also typically provided to the turbine blades 34 and stators 36, in the form of internal cooling flow.

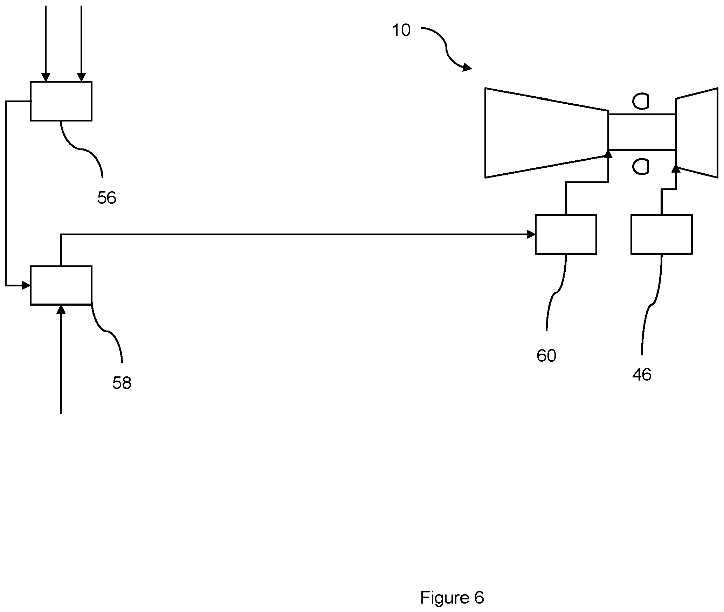

The controller 46 is part of a wider aircraft control system, as outlined in figure 6. The aircraft control system comprises an autopilot system 56, which receives inputs from aircraft data systems (such as air data sensors etc), and control inputs from a user such as a pilot. Optionally, the autopilot system 56 may further receive data directly from a further controller, such as a ground-based controller - examples include an Air Traffic Controller (ATC). The autopilot system is configured to translate pilot or controller inputs (such as stick movements, or altitude / speed request inputs) into flight control surface commands, and throttle commands. The aircraft control system further comprises an auto-throttle 58, which may form part of the autopilot system 56, and is configured to receive inputs from the autopilot, as well as inputs from a pilot (such as throttle quadrant inputs). The auto-throttle 58 is configured to receive inputs such as engine thrust demands, and forward these to an engine controller such as a FADEC 60. The FADEC 60 is configured to receive inputs from the auto-throttle and engine sensors, and convert engine thrust demands to fuel flow demand, as well as any engine variable geometry demands (such as compressor variable vane angle). Consequently, engine thrust is controlled by the autopilot 56 or auto-throttle 56 by way of the FADEC 60.

The gas turbine further comprises of first and second electrical heating devices in the form of resistance heaters 44, 52. Each resistance heater 44, 52 is provided within a respective cooling passage 40, 48, and as such is configured to heat cooling air provided in that respective passage. Consequently, when each heater 44, 52 is activated, the temperature of the cooling air is raised, or at least the cooling effect of the cooling air through the passages is diminished.

Each heater 44, 52 is coupled to an electrical power source such as a gas turbine engine driven electrical generator 54 (shown in figure 1). Alternatively, or in addition, the electrical power source could comprise an electrical storage device such as a fuel cell or chemical battery 56 (also shown in figure 1). Since electrical power is only required for a relatively short duration, relatively little energy storage is required. Since the resistive heaters 44, 52 can work with any type of electrical power, the energy source could be either AC or DC.

Where the electrical heater 44, 52 is activated, the temperature of the coolant air in the respective passages 40, 48 is increased. This results in increased heating, or reduced cooling effectiveness of the cooling air to the parts of the disc 32 cooled by that airflow. Consequently, activation of the heaters 144, 152 will have a similar effect to reducing cooling air mass flow rate, and so will result in increased disc 32 temperature. Similar heaters (not shown) could be provided within the compressors 14, 15, to heat the compressor discs 72.

The heaters 44, 52 can be controlled by the controller 46.The controller 46 is configured to operate the heaters 44, 52 to control cooling airflow in dependence on detection of engine acceleration or deceleration events, or predicted imminent engine acceleration or deceleration events. In particular, the controller 46 may be configured to increase heating in advance of imminent, or likely imminent rapid engine acceleration (for example, so-called "slam acceleration") or rapid engine deceleration. Alternatively, or in addition, the controller 46 may be configured to increase heating in advance of imminent or likely imminent significant increases in relative throttle position. For example, the system may increase heating where the engine increases in thrust or is predicted to increase in thrust from a relatively low throttle position (such as flight idle, or cruise thrust), to a relatively high throttle position (such as climb thrust, take-off thrust, or go-around thrust). The controller 46 may be configured to control both heaters 44, 52, or may control one of the heaters 44, 52 only.

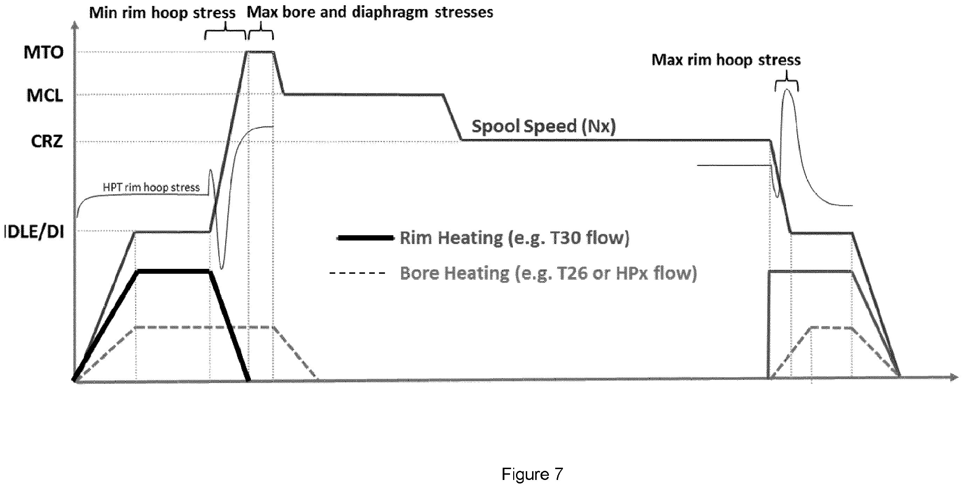

It will be appreciated that, in view of the heat addition from combustion, the further addition of heat due to operation of the heaters 44, 52 will result in increased disc 32 temperature prior to the imminent or likely rapid engine acceleration, or during engine acceleration. This will have the effect of increasing the time over which the temperature increase will occur. Similarly, addition of heat due to operation of the heaters during engine acceleration will prevent rapid cooling of the discs, and so again increase the time over which the temperature reduction will occur due to reduced cooling flow. This is illustrated in figure 7.

Figure 7 shows a typical flight profile in terms of how spool speed (i.e. low-pressure or high-pressure shaft 27, 28 shaft speed, also known as N1 and N2 respectively) varies during a typical flight. In a typical flight, rapid acceleration is typically required during take-off, as the engine accelerates from idle to maximum take-off speed (MTO). The engine then decelerates slightly to maximum climb speed (MCL), then decelerates further to cruise speed (CRZ). Toward the end of the flight, the engine decelerates further back to idle / descent idle (IDLE/DI). A further acceleration may be anticipated when the engine decelerates from CRZ to IDEL/DI, since a go-around may be required.

Superimposed on this graph are lines showing where increased cooling air heating may be required. The solid bold line shows where increased rim heating / is required, with a higher line on the graph corresponding to increased heating. This can be achieved by operating the second heater 52. Consequently, the rim temperature starts to rise. Additional heating is maintained until the engine starts to accelerate toward a higher throttle setting, whereupon the heater 52 is deactivated, to provide increased cooling flow effectiveness. Alternatively or in addition, the additional heating may be maintained for a predetermined length of time, or until the disc 32 reaches a predetermined temperature. As will be appreciated, maintaining the disc 32 at a high temperature for long periods may be detrimental to disc life, and so a balance must be struck.

Consequently, the temperature of the rim 39 will rise during the idle period, when increased heating is provided. As the engine accelerates, and cooling is restored, the rim will continue to heat, until thermal equilibrium is reached. However, since the temperature of the rim 39 will be relatively high, the rate of temperature increase during this period will be relatively low. Consequently, the period over which the heating occurs is lengthened, such that the thermal shock is reduced. In contrast, without this increased heating prior to engine acceleration, disc heating will only occur when the engine acceleration is conducted. Consequently, the time over which the disc 32 is heated is short, and so thermal gradients will be formed.

Since, in accordance with the disclosed method, the rate of temperature increase is reduced, thermal gradients within the disc 32 are also reduced. Consequently, thermal stresses are reduced, which will result in reduced rim hoop stress, and so reduced crack formation and propagation. The disclosed method therefore results in increased engine life.

As previously mentioned, the first heaters 44 is also controlled to provide increased heating in anticipation of engine acceleration. As shown in figure 7, this is provided during idle, when engine acceleration is anticipated. However, unlike the second cooling flow, first cooling flow continues at a reduced rate for a time during engine acceleration. This is because it typically takes a longer amount of time for the temperature to rise in the bore during acceleration, compared to the rim. Consequently, reduced cooling / increased heating is required for longer, in order to ensure a steady rise in temperature, and so reduced thermal shock.

As previously mentioned, reduced increased heating may be provided at least one of prior to and during deceleration from the cruise throttle setting, to the descent idle throttle setting, in anticipation of a go-around. Again, both heaters are actuated to increase disc temperature, or reduce dis temperature cooling, and held closed until the risk of engine acceleration has passed, such as an indication that the aircraft has landed. Additionally, a sudden reduction in engine throttle position may itself setup an increased thermal gradient, in view of the reduced heat input from combustion, and the continued cooling from the cooling airflow. Consequently, by heating the discs during deceleration, disc life can be extended.

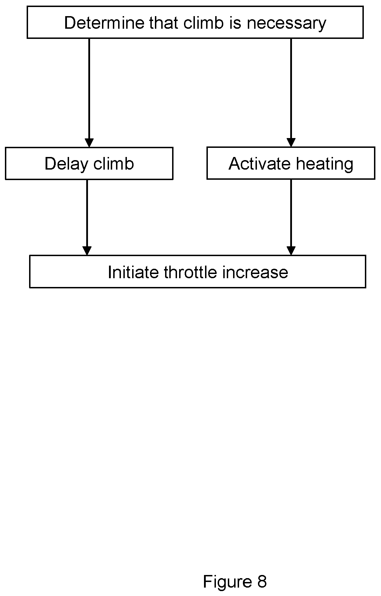

One or more of several methods of determining that a rapid engine acceleration is imminent, or is likely imminent, may be used. In a first case, as illustrated by the flow diagram in figure 8, where the aircraft is under auto-pilot 56 control, the auto-pilot may determine that a climb is necessary, in order to achieve a desired aircraft altitude. Under such circumstances, the auto-pilot may communicate that a rapid engine acceleration is imminent, by sending an advanced acceleration signal to the controller 46, optionally via the auto-throttle 58 and / or FADEC 60, that a rapid engine acceleration is imminent. It will be appreciated that, in general, this signal will be separate and distinct from an engine thrust increase demand signal. In some cases, the auto-pilot may delay a thrust increase or altitude increase demand signal, such that a time delay is provided between the advanced acceleration signal, and the thrust demand increase signal. In response to this signal, valves 44, 52 are operated to reduce cooling. This provides time for the cooling flow to be reduced, and have an effect on the turbine disc, as will be described later. Once a sufficient delay is provided for, the engine is then accelerated.

In a second case, as illustrated in figure 8, the system may comprise an additional user provided input that a rapid engine acceleration is imminent, or likely imminent. For example, the auto-pilot may have one or more user selected flight modes. Such modes might include "taxi" mode, "take-off" mode, "climb" mode, "cruise" mode and "descent" mode, amongst others. Each flight mode will have an associated likelihood of an imminent engine acceleration. For example, in taxi mode, engine thrust is low, and it can be anticipated that the aircraft is likely to shortly enter take-off mode. Since engine acceleration is required during take-off mode, selection of taxi mode may indicate an imminent engine acceleration.

Similarly, in descent mode, engine thrust is again low, and it can be anticipated that the aircraft may have to perform a "go-around" manoeuvre, in which high engine thrust is required. Consequently, selection of descent mode may indicate an increased likelihood of imminent engine acceleration.

Again, in circumstances where an imminent engine acceleration is imminent or likely, then a signal is provided to the controller 46 to reduce cooling flow.

In a third case, an aircraft operation, such as a pilot or Air Traffic Controller, may provide an indicator that an aircraft manoeuvre will be required. A signal may be provided directly from the ATC to the aircraft, to reduce cooling flow, to provide for increased disc temperatures, in advance of initiation of the manoeuvre.

Similarly, increased heating may be provided on detection of engine acceleration or deceleration, rather than based on a prediction. For example, the controller 46 may be configured to control the heaters 44, 52 based on throttle setting, with sudden increased throttle settings from a low throttle setting, or sudden reduced throttle settings from a high throttle setting, triggering activation of the heaters 44, 52. A further option for controlling the heaters may be based on throttle setting and disc temperature estimates. For example, where the controller 46 determines that the disc temperature is low, and a sudden throttle increase is demanded, the heaters 44, 52 may be actuated. Similarly, where the controller 46 determines that the disc temperature is high, and a sudden throttle decrease is demanded, the heaters 44, 52 may be actuated. Consequently, temperature gradients across the discs 32 are minimised.

It will be appreciated that other means for increasing the temperature of the disc in advance of an engine acceleration event could be provided for, either as a replacement, or in addition to the means provided for in the first embodiment.

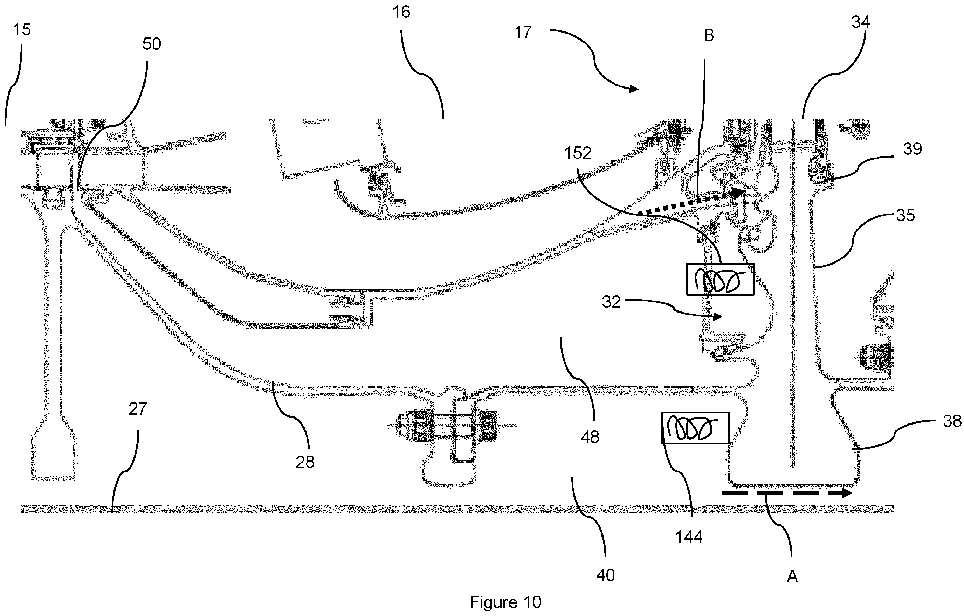

Figure 10 shows an alternative embodiment. In this embodiment, the electrical resistive heaters are replaced with electrical inductance heaters 144, 152. Each inductive heater 144, 152 comprises a respective coil of wire provided with alternating electrical current (AC), and generates an alternating magnetic field, as will be understood by the skilled person. Each heater 144, 152 is placed in close proximity with a part of the disc 32 which requires heating (e.g. the rim 39 and the bore 38 respectively). Alternating magnetic fields from the heaters 144, 152 will interact with the conductive material of the disc 32 to produce an alternating electric field (i.e. eddy currents). These currents produce heat from within the disc 32, thereby raising its temperature. Again therefore, the heaters 144, 152 can be used in a similar manner to the heaters 44, 52, and used in accordance with any of the methods herein described.

Several advantages are provided by using inductive heaters rather than resistive heaters. Firstly, inductive heaters directly heat the disc 32, thereby preventing unnecessary heating of other components, such as the blades 34. Secondly, the direct heating may result in higher efficiency, and so less energy requirements. Thirdly, inductive heating will typically result in heating of the disc 32 from within, thereby significantly reducing the thermal gradients for a given heating input, since the heating from the hot main gas flow will primarily heat the surfaces of the disc 32. Consequently, the energy input, and the overall size of the heaters 144, 152 will be further reduced, thereby further increasing efficiency.

It will be understood that the invention is not limited to the embodiments above-described and various modifications and improvements can be made without departing from the concepts described herein.

## Claims

1. A method of operating a gas turbine engine (10) for an aircraft comprising detecting an engine acceleration event from a relatively low throttle position comprising one of flight idle, or cruise thrust, to a relatively high throttle position comprising one of climb thrust, take-off thrust, or go-around thrust, or a deceleration event, or determining that the engine acceleration or deceleration event is imminent or may be imminent; and on detection of the engine acceleration or deceleration event, or in advance of the engine acceleration or deceleration event, reducing cooling or increasing turbine rotor disc (32) heat input to raise a temperature of the rotor disc (32) or reduce a cooling rate of the rotor disc (32).

2. A method according to claim 1, wherein the step of detecting the engine acceleration or deceleration event comprises detecting an autopilot or autothrottle input.

3. A method according to claim 1, wherein the step of determining that the engine acceleration or deceleration event is imminent comprises determining an impending flight phase of the aircraft.

4. A method according to claim 3, wherein the engine acceleration is determined as being imminent when the aircraft is expected to commence one or more of a climb flight phase, and a descent flight phase.

5. A method according to any of the preceding claims, wherein the step of determining that the engine acceleration event is imminent comprises receiving data from one or more of an auto-pilot controller, an auto-throttle controller, and an air traffic control system.

6. A method according to any of the preceding claims, wherein the method comprises maintaining increased heating of the disc (32) until the engine acceleration or deceleration event commences, or may comprise continuing the increased heating during engine acceleration or deceleration.

7. A method according to any of the preceding claims, wherein the method comprises ceasing increased heating of the disc when the disc reaches a predetermined temperature.

8. A method according to any of the preceding claims, wherein the step of increasing disc (32) heat input comprises activating an electrical heating device (44, 52) configured to increase disc (32) temperature.

9. A method according to claim 8, wherein the electrical heating device comprises one or more of a resistive heating device (44, 52) and an induction heating device (144, 152).

10. A method according to claim 9, wherein the electrical heating device comprises one of the resistive heating device (44, 52) and the induction heating device (144, 152) provided in a cooling airflow, configured to raise a temperature of the cooling airflow delivered to the turbine disc (32).

11. A method according to claim 9, wherein the electrical heating device comprises an inductive heater (144, 152) configured to directly induce inductive heating in the turbine disc (32).

12. A method according to any of the preceding claims, wherein the method comprises increasing heat input to one or more of a rim of the disc (32), and a bore of the disc (32).

13. A gas turbine engine (10) for an aircraft comprising an electrical heating device (44, 144 52, 152) configured to increase a temperature of a turbine rotor disc (32) and being **characterised in that** it has a controller (46) configured to control the gas turbine engine (10) in accordance with the method of any of claims 1 to 12.

## Patentansprüche

1. Verfahren zum Betreiben eines Gasturbinentriebwerks (10) für ein Luftfahrzeug, umfassend
Detektieren eines Triebwerksbeschleunigungsereignisses von einer relativ niedrigen Drosselklappenposition, die einen von Flugleerlauf oder Reiseflugschub umfasst, zu einer relativ hohen Drosselklappenposition, die einen von Steigflugschub, Startschub oder Durchstartschub umfasst, oder eines Abbremsereignisses, oder Bestimmen, dass das Triebwerksbeschleunigungs- oder -abbremsereignis unmittelbar bevorsteht oder unmittelbar bevorstehen könnte; und bei der Detektion des Triebwerksbeschleunigungs- oder -abbremsereignisses oder vor dem Triebwerksbeschleunigungs- oder -abbremsereignis, Reduzieren der Kühlung oder Erhöhen der Wärmzufuhr zu einer Turbinenrotorscheibe (32), um eine Temperatur der Rotorscheibe (32) zu erhöhen oder eine Abkühlrate der Rotorscheibe (32) zu reduzieren.

2. Verfahren gemäß Anspruch 1, wobei der Schritt des Detektierens des Triebwerksbeschleunigungs- oder -abbremsereignisses Detektieren einer Autopilot- oder Autodrosseleingabe umfasst.

3. Verfahren gemäß Anspruch 1, wobei der Schritt des Bestimmens, dass das Triebwerksbeschleunigungs- oder -abbremsereignis unmittelbar bevorsteht, Bestimmen einer anstehenden Flugphase des Luftfahrzeugs umfasst.

4. Verfahren gemäß Anspruch 3, wobei bestimmt wird, dass die Triebwerksbeschleunigung unmittelbar bevorsteht, wenn erwartet wird, dass das Luftfahrzeug entweder eine oder mehrere Steigflugphasen oder Sinkflugphasen beginnt.

5. Verfahren gemäß einem der vorhergehenden Ansprüche, wobei der Schritt des Bestimmens, dass das Triebwerksbeschleunigungsereignis unmittelbar bevorsteht, Empfangen von Daten von einem oder mehreren von einer Autopilot-Steuerung, einer automatischen Drosselklappensteuerung und einem Flugverkehrssteuersystem umfasst.

6. Verfahren gemäß einem der vorhergehenden Ansprüche, wobei das Verfahren Aufrechterhalten einer erhöhten Erwärmung der Scheibe (32) umfasst, bis das Triebwerksbeschleunigungs- oder -abbremsereignis beginnt, oder Fortführen der erhöhten Erwärmung während der Triebwerksbeschleunigung oder -abbremsung umfassen kann.

7. Verfahren gemäß einem der vorhergehenden Ansprüche, wobei das Verfahren Beenden der erhöhten Erwärmung der Scheibe umfasst, wenn die Scheibe eine vorbestimmte Temperatur erreicht.

8. Verfahren gemäß einem der vorhergehenden Ansprüche, wobei der Schritt des Erhöhens der Wärmezufuhr zu der Scheibe (32) Aktivieren einer elektrischen Heizvorrichtung (44, 52) umfasst, die dazu konfiguriert ist, die Temperatur der Scheibe (32) zu erhöhen.

9. Verfahren gemäß Anspruch 8, wobei die elektrische Heizvorrichtung eine oder mehrere von einer Widerstandsheizvorrichtung (44, 52) und einer Induktionsheizvorrichtung (144, 152) umfasst.

10. Verfahren gemäß Anspruch 9, wobei die elektrische Heizvorrichtung eine von der Widerstandsheizvorrichtung (44, 52) und der Induktionsheizvorrichtung (144, 152) umfasst, die in einem Kühlluftstrom bereitgestellt ist, dazu konfiguriert, eine Temperatur des Kühlluftstroms zu erhöhen, der an die Turbinenscheibe (32) abgegeben wird.

11. Verfahren gemäß Anspruch 9, wobei die elektrische Heizvorrichtung eine Induktionsheizung (144, 152) umfasst, die dazu konfiguriert ist, eine Induktionserwärmung in der Turbinenscheibe (32) direkt zu induzieren.

12. Verfahren gemäß einem der vorhergehenden Ansprüche, wobei das Verfahren Erhöhen der Wärmezufuhr zu einem oder mehreren von einem Rand der Scheibe (32) und einer Bohrung der Scheibe (32) umfasst.

13. Gasturbinentriebwerk (10) für ein Luftfahrzeug, umfassend eine elektrische Heizvorrichtung (44, 144, 52, 152), die dazu konfiguriert ist, eine Temperatur einer Turbinenrotorscheibe (32) zu erhöhen, und **dadurch gekennzeichnet ist, dass** sie eine Steuerung (46) aufweist, die dazu konfiguriert ist, das Gasturbinentriebwerk (10) entsprechend dem Verfahren nach einem der Ansprüche 1 bis 12 zu steuern.

## Revendications

1. Procédé de fonctionnement d'un moteur à turbine à gaz (10) pour un aéronef comprenant la détection d'un événement d'accélération de moteur à partir d'une position de mannette des gaz relativement basse comprenant l'une des positions de ralenti en vol ou de poussée en vol de croisière,
jusqu'à une position de manette des gaz relativement élevée comprenant l'une d'une poussée de montée, d'une poussée de décollage ou d'une poussée de remise des gaz, ou d'un événement de décélération, ou la détermination que l'événement d'accélération ou de décélération du moteur est imminent ou peut être imminent ; et lors de la détection de l'événement d'accélération ou de décélération du moteur, ou avant l'événement d'accélération ou de décélération du moteur, la réduction du refroidissement ou l'augmentation de l'apport de chaleur du disque (32) de rotor de turbine pour accroître une température du disque (32) de rotor ou réduire une vitesse de refroidissement du disque (32) de rotor.

2. Procédé selon la revendication 1, ladite étape de détection de l'événement d'accélération ou de décélération du moteur comprenant la détection d'une entrée de pilote automatique ou d'automanette.

3. Procédé selon la revendication 1, ladite étape de détermination que l'événement d'accélération ou de décélération du moteur est imminent comprenant la détermination d'une phase de vol prochaine de l'aéronef.

4. Procédé selon la revendication 3, ladite accélération du moteur étant déterminée comme étant imminente lorsque l'aéronef est censé commencer l'une ou plusieurs d'une phase de vol en montée et d'une phase de vol en descente.

5. Procédé selon l'une quelconque des revendications précédentes, ladite étape de détermination que l'événement d'accélération de moteur est imminent comprenant la réception de données en provenance d'un ou plusieurs d'un dispositif de commande de pilote automatique, d'un dispositif de commande d'auto-manette et d'un système de commande de trafic aérien.

6. Procédé selon l'une quelconque des revendications précédentes, ledit procédé comprenant le maintien d'un chauffage accru du disque (32) jusqu'à ce que l'événement d'accélération ou de décélération du moteur commence, ou pouvant comprendre la poursuite du chauffage accru durant l'accélération ou la décélération du moteur.

7. Procédé selon l'une quelconque des revendications précédentes, ledit procédé comprenant l'arrêt du chauffage accru du disque lorsque le disque atteint une température prédéfinie.

8. Procédé selon l'une quelconque des revendications précédentes, ladite étape d'augmentation de l'apport de chaleur du disque (32) comprenant l'activation d'un dispositif de chauffage électrique (44, 52) conçu pour augmenter la température du disque (32).

9. Procédé selon la revendication 8, ledit dispositif de chauffage électrique comprenant un ou plusieurs dispositifs de chauffage résistif (44, 52) et un dispositif de chauffage par induction (144, 152).

10. Procédé selon la revendication 9, ledit dispositif de chauffage électrique comprenant l'un du dispositif de chauffage résistif (44, 52) et du dispositif de chauffage par induction (144, 152) prévu dans un flux d'air de refroidissement, conçu pour accroître une température du flux d'air de refroidissement délivré au disque (32) de turbine.

11. Procédé selon la revendication 9, ledit dispositif de chauffage électrique comprenant un chauffage inductif (144, 152) conçu pour induire directement un chauffage inductif dans le disque (32) de turbine.

12. Procédé selon l'une quelconque des revendications précédentes, ledit procédé comprend l'augmentation de l'apport de chaleur vers l'un ou plusieurs d'un bord du disque (32) et d'un alésage du disque (32).

13. Moteur à turbine à gaz (10) pour un aéronef comprenant un dispositif de chauffage électrique (44, 144, 52, 152) conçu pour augmenter une température d'un disque (32) de rotor de turbine et étant **caractérisé en ce qu'**il comporte un dispositif de commande (46) conçu pour commander le moteur à turbine à gaz (10) conformément au procédé selon l'une quelconque des revendications 1 à 12.
